# EUROPÄISCHE PATENTANMELDUNG

(11) **EP 2 327 555 A1**
(43) Veröffentlichungstag der Anmeldung: **01.06.2011**
(21) Anmeldenummer: 10192488.4
(22) Anmeldetag: 25.11.2010
(51) Int. Cl.: B41J 3/407

(54) **Verfahren zur adaptiven Anpassung des Volumenstroms der ausgestoßenen Tinte**

(30) Priorität: 27.11.2009 AT 18882009
(71) Anmelder: Durst Phototechnik Digital Technology GmbH, 9900 Lienz (AT)
(72) Erfinder: Obertegger, Franz, 39042 Brixen (IT)
(74) Vertreter: Burger, Hannes

(57) **Zusammenfassung**

Verfahren zur adaptiven Anpassung des Volumenstroms der ausgestoßenen Tinte

Die Erfindung betrifft ein Verfahren zur adaptiven Anpassung des Volumenstroms der ausgestoßenen Tinte für einen Tintenstrahldrucker (4), wobei durch Ermittlung einer Bewegungsinformation, des sich relativ zum Tintendruckkopf bewegenden Druckteils, eine Koordinateninformation relativ zum Druckteil ermittelt wird und ferner durch Vergleich der Koordinateninformation mit einem hinterlegten Profilmodell des Druckteils, eine Steigung der zu bedruckenden Oberfläche (5) in Bezug zur Ausstoßrichtung der Tinte ermittelt wird, wobei bei Überschreiten eines Schwellwerts der Steigung, der Volumenstrom der ausgestoßenen Tinte proportional zur Steigung erhöht wird. Die Erfindung betrifft ferner ein Verfahren zur adaptiven Anpassung der Ansteuerinformation für einen Tintenstrahldrucker (4) bei dem ein Druckdüsentestbild gedruckt wird, welches von einer Bilderfassungsvorrichtung (16) erfasst wird, und ein Analysemodul (17) für das erfasste Abbild eine Druckdichteanalyse durchführt und daraus eine Druckdichteverteilung ermittelt. Ferner wird eine Positionsanalyse durchgeführt und daraus eine Abweichungsinformation ermittelt, wobei im folgenden Druckvorgang vom Druckdatenaufbereitungsmodul das zu druckende Abbild mit der Druckdichteverteilung und ferner die Ansteuerinformation mit der Abweichungsinformation verknüpft wird.

## Beschreibung

Die Erfindung betrifft ein Verfahren zur adaptiven Anpassung des Volumenstroms der ausgestoßenen Tinte für einen Tintenstrahldrucker und ein Verfahren zur adaptiven Anpassung der Ansteuerinformation für einen Tintenstrahldrucker. Die Erfindung betrifft ferner einen Tintenstrahldrucker.

Tintenstrahldrucker eignen sich hervorragend zur Herstellung individuell ausgebildeter Druckbilder, da damit beliebige Abbilder auf ein Druckteil übertragen werden können. Entsprechend der Ausbildung des Tintenstrahldruckers sind sowohl Graustufenbilder, als auch hochqualitative Mehrfarbbilder herstellbar. Dazu wird das zu druckende Abbild von einem Druckdatenaufbereitungsmodul entsprechend bearbeitet, um insbesondere aus einem kontinuierlichen Abbild ein diskretes Abbild der einzelnen Druckbildpunkte zu generieren. Insbesondere ist es bei einem Farbbild erforderlich, dass das kontinuierliche Farbbild in einzelne Farbauszüge mit diskreten Druckpunkten aufgeteilt wird.

Durch diese Diskretisierung der Druckbildpunkte ergeben sich mehrere Probleme, die sich negativ auf die Qualität des gedruckten Abbilds auswirken können. Beispielsweise kann aufgrund einer geringfügigen Variation der herstellungsbedingt festgelegten und somit nicht änderbaren Geometrie der einzelnen Druckdüsen, eine grundsätzliche Abweichung von einem gewünschten, regelmäßigen Druckpunktraster gegeben sein. Besonders störend ist es, wenn diese Störung nur einzelne Düsen betrifft und gegebenenfalls erst im Laufe der Betriebszeit auftritt. Auch kann es vorkommen, dass bei identischer elektrischer Ansteuerung der einzelnen Druckdüsen, die ausgestoßene Tintenmenge zwischen einzelnen Düsen variiert. Eine weitere mögliche Störung rührt von den verwendeten Materialien her, da ein Farbbild bspw. aus vier Farbkomponenten (YCMK) hergestellt wird, wobei jede einzelne Tinte spezifische chemische Eigenschaften haben wird. Besonders problematisch ist hier die Benetzungsfähigkeit bzw. die Saugfähigkeit des Druckteils bezogen auf die einzelnen verwendeten Tinten. Soll nun ein gleichmäßiger Farb- bzw. Helligkeitseindruck entstehen, muss sichergestellt sein, dass jede Tinte auf dem Druckteil einen gleichwertigen Helligkeits- bzw. Farbeindruck hinterlässt. Ändert sich die Saugfähigkeit der Oberfläche des Druckteils, wird sich der Durchmesser der aufgebrachten Tintentropfen ändern und es somit zu einer Abweichung vom gewünschten Farb- bzw. Helligkeitsverlauf kommen.

Da die einzelnen Düsenreihen der Druckdüsen eines Tintenstrahldruckers bei der Produktion genau gegeneinander ausgerichtet und abgestimmt werden, und während der Betriebsdauer diese relative Anordnung zueinander jedenfalls erhalten bleiben soll, können Druckfehler, die sich beispielsweise aufgrund von Abnutzungserscheinungen während der Betriebsdauer ergeben, nicht durch eine Änderung der Druckdüsenanordnung am Druckkopf behoben werden. Ferner sind Vorkehrungen zu treffen, um einen sich abzeichnenden Druckfehler rechzeitig zu bemerken und so die Gefahr der Produktion von Ausschussware zu verhindern.

Bei der Übertragung des zu druckenden Abbilds auf das Druckteil sind spezifische geometrische Vorkehrungen zu treffen und insbesondere während des Druckvorgangs möglichst genau einzuhalten, um das Druckbild in der gewünschten Form auf das Druckteil zu übertragen. Insbesondere ist der Abstand zwischen der Austrittsöffnung der Druckdüse und der Oberfläche des Druckteils auf den der Tintentropfen auftrifft, von besonderer Bedeutung für die Bildung des Druckpunkts. Ändert sich dieser Abstand wird sich auch die Größe des Druckpunkts ändern, wobei insbesondere bei einem zu geringen Abstand die Gefahr besteht, dass der Druckpunkt aufplatzt und somit ein stark gestörtes Druckbild ergibt. Auch kann es bei Oberflächen deren Flächenerstreckung von der Normalen auf die Flugbahn der Tintentropfen abweicht, zur Bildung von deutlich verzerrten Druckpunkten kommen, insbesondere besteht wiederum die Gefahr eines aufplatzen des Tropfens bzw. kann der Tropfen stark in eine Richtung verrinnen. Soll nun ein Druckteil bedruckt werden, welches ein Höhenprofil als Oberflächenstruktur aufweist, wie dies beispielsweise bei strukturierten Fliesen bzw. Bauprofilen der Fall ist, ist jedenfalls eine Korrektur des Druckbilds vorzunehmen, da sonst das Druckbild entlang des Höhenprofils deutliche Qualitätseinbußen aufweisen wird.

Die Aufgabe der Erfindung liegt darin ein Tintenstrahldruckverfahren dahingehend zu verbessern, dass unabhängig von den Oberflächeneigenschaften des Druckteils, insbesondere im Hinblick auf die geometrische Struktur und die Absorptionseigenschaften der zu bedruckten Oberfläche, eine gleich bleibend hohe Druckqualität eingehalten werden kann.

Die Aufgabe der Erfindung wird durch ein Verfahren zur adaptiven Anpassung des Volumenstroms der ausgestoßenen Tinte gelöst. Dabei wird eine Bewegungsinformation eines sich in einer Bewegungsebene relativ zum Tintendruckkopf bewegenden Druckteils ermittelt, um daraus eine Koordinateninformation relativ zum Druckteil ermitteln zu können. Durch Vergleich der Koordinateninformation mit einem hinterlegten Profilmodell des Druckteils wird eine Steigung der zu bedruckenden Oberfläche in Bezug zur Ausstoßrichtung der Tinte ermittelt, wobei bei Überschreiten eines Schwellwerts der Steigung, der Volumenstrom der ausgestoßenen Tinte proportional zur Steigung erhöht wird.

Unter einem Volumenstrom versteht man das Volumen eines Mediums, insbesondere der ausgestoßenen Tinte, das sich innerhalb einer Zeiteinheit durch einen Querschnitt bewegt. Beim Tintenstrahldruck trifft ein Tintentropfen für gewöhnlich auf eine normal zu seiner Flugbahn ausgerichtete Oberfläche des zu bedruckenden Mediums auf. Zur vollständigen Bedeckung mit Farbe, ist daher ein, vom Fachmann berechenbarer, Eintrag an Tinte erforderlich. Ist nun eine um einen Winkel ϕ zur Normalen auf die Flugbahn des Tropfens geneigte Fläche zu bedrucken, muss die aufgetragene Tintenmenge und damit der Volumenstrom angepasst werden, um die vorgegebene Druckqualität einhalten zu können. Das sich das Druckteil bevorzugt mit einer konstanten Geschwindigkeit unter den Tintendruckkopf hindurchbewegt, kommt es bei einer geneigten Fläche zu dem Effekt, dass die zu bedruckende Fläche aufgrund des Verkürzungsfaktors cos ϕ in kürzere Zeit unter dem Tintenstrahl hindurchbewegt wird, so das bei einem konstant gehaltenen Volumenstrom, eine zu geringe Menge an Tinte auf die Fläche aufgetragen wird. Je stärker die zu bedruckende Fläche gegenüber der Normalebene geneigt ist, desto mehr Tinte muss je Zeiteinheit aufgebracht werden. Insbesondere ist diese Erhöhung der auszustoßenden Tintenmenge proportional zum Faktor 1/cos ϕ.

Bei nicht strukturierten Druckteilen wird die zu bedruckende Oberfläche zumeist normal zur Flugbahn des Tropfens ausgerichtet sein. Ist die zu bedruckende Oberfläche geneigt, weist diese als eine Steigung auf, lässt sich diese Steigung im bekannter Weise als Höhenunterschied im Bezug auf die Maßeinheit beschreiben (m = Δy/Δx), so dass sich der Steigungswinkel ebenfalls in bekannter Weise als arc tan (m) ergibt.

Im Weiteren unter dem Begriff Normalebene jene, ggf. gedachte, Ebene im Auftreffpunkt des Tropfens verstanden, die normal zur Flugbahn der Tintentropfen ausgerichtet ist. Bei einem

Druckteil ohne Höhenprofil entspricht diese Normalebene unmittelbar der zu bedruckenden Oberfläche.

Durch die erfindungsgemäße Ermittlung der Steigung der zu bedruckenden Oberfläche kann somit bei Überschreiten eines Schwellwerts der Volumenstrom erhöht werden, so dass stets die erforderliche Menge an Tinte auf die zu bedruckende Oberfläche aufgetragen wird.

Ein Druckteil kann ein Höhenprofil aufweisen, welches nicht notwendigerweise an einer äußeren Begrenzung des Druckteils angeordnet ist, sondern beispielsweise in Mitte des Druckteils vorhanden sein kann. Daher wird aus einer Bewegungsinformation des sich bewegenden Druckteils eine Koordinateninformation ermittelt, wobei diese Koordinateninformation insbesondere einen direkten Rückschluss auf die Position des Druckteils relativ zur Druckdüsenanordnung gestattet. Somit kann auch direkt eine Beziehung zwischen dem Höhenprofil und damit dem Abstand zwischen dem zu bedruckenden Abschnitt des Druckteils und der Druckdüsenanordnung und insbesondere dessen Steigung in Relation zur Normalebene ermittelt werden. Beispielsweise kann die Erfassung der Bewegungsinformation dem Tintendruckkopf vorgelagert sein, aufgrund der ermittelten Koordinateninformation lässt sich jedoch klar festlegen, wann ein spezifischer Abschnitt des Druckteils unter dem Tintendruckkopf, insbesondere unter den Tintenausstoßdüsen angeordnet ist. Durch Vergleich der Koordinateninformation mit einem hinterlegten Profilmodell lässt sich nun insbesondere angeben, wie stark die zu bedruckende Oberfläche von der Normalen auf den Tintenstrahl abweicht. Da sich eine geringfügige Schwankung dieser Ausrichtung zumeist nicht bzw. nur sehr gering auf die Qualität des Druckbildes auswirken wird, ist es von Vorteil, wenn erst bei Überschreiten eines Schwellwerts der Steigung, der Volumenstrom der ausgestoßenen Tinte erhöht wird. Zur Formung eines entsprechenden Tropfens ist nach dem Ausstoß der Tinte eine gewisse Zeit bzw. eine gewisse Wegstrecke erforderlich, die der Tintentropfen zurücklegen muss, bevor dieser auf die zu bedruckende Oberfläche trifft. Dieser Abstand ist durch die technologischen Gegebenheiten der Druckdüse und die physikalisch-chemischen Eigenschaften der Tinte gegeben. Insbesondere sind einem Fachmann aus dem Gebiet der Tintenstrahldrucktechnik die Formelwerke bekannt, um diesen Abstand entsprechend festlegen zu können. Durch das erfindungsgemäße Verfahren lassen sich nun auch profilierte Druckmedien zuverlässig und ohne Beeinträchtigung des Druckbilds bedrucken.

Von Vorteil ist eine Weiterbildung nach der der Schwellwert als Stufenwertprofil festgelegt wird, da somit eine abgestufte Anpassung des Volumenstroms möglich ist. Da die Druckdüsen zumeist nur innerhalb sehr enger Betriebsparameter betrieben werden können, wobei zumeist keine lineare Anpassung des Volumenstroms möglich ist, kann die Druckdüse dahingehend optimiert werden, eine bestimmte Anzahl festgelegter Tintenvolumina ausstoßen zu können. Wird nun auch der Schwellwert als Stufenwertprofil ausgebildet, lässt sich somit die Änderung der Steigung in Bereiche unterteilen, für die jeweils eine entsprechend angepasste Tintenmenge von der Druckdüse ausgestoßen wird, sodass ein entsprechender Druckpunkt auf der Oberfläche des Druckteils geformt wird. Insbesondere jedoch unter Einhaltung der physikalischen Erfordernisse zur Bildung eines entsprechend sauber ausgebildeten Druckpunkts. Zur Bildung unterschiedlicher Tintenausstoßmengen kann bspw. eine einzelne Tintenausstoßdüse mehrere Ansteuerelemente aufweisen, die bei einzelner bzw. kombinierter Ansteuerung die gewünschte Tintenmenge ausstoßen. Mittels des Stufenwertprofils können nun beispielsweise jene Ansteuerelemente mit Energie beaufschlagt werden, die zum Ausstoß der gewünschten Tintenmenge und damit zur Formung des entsprechenden Tropfens erforderlich sind.

Ein Höhenprofil des Druckteils kann beispielsweise stufenförmig und/oder ansteigend bzw. abfallend ausgebildet sein. Insbesondere wird es Abschnitte geben, in denen die Flächennormale des zu bedruckenden Abschnitts nicht parallel zur Ausstoßrichtung der Tintentropfen ausgerichtet ist und sich somit die je Tropfen zu bedruckende Fläche ändert. Für die Bildung des Druckpunkts auf der Oberfläche ist es jedoch von Bedeutung, welche effektive Fläche dem auftreffenden Druckpunkt zur Verfügung steht bzw. von diesem benetzt werden muss. Gemäß einer Weiterbildung wird aus der ermittelten Steigung eine Projektionsfläche parallel zur Bewegungsebene ermittelt, wodurch sich durch Vergleich mit einer nicht geneigten Grundfläche wiederum berechnen lässt, in welchem Umfang die auszustoßende Tintenmenge angepasst werden muss, insbesondere erhöht werden muss, um auf die geneigte Fläche die erforderliche Menge an Tinte aufzubringen.

Da die Druckdüsen zum Ausstoß eines Tintentropfens zumeist von einem elektrischen Aktuator angesteuert werden, der beispielsweise elektrothermisch oder piezoelektrisch wirkend, den Ausstoß einer definierten Menge an Tinte auslöst, kann durch Erhöhung der Dauer oder der Amplitude des Ansteuerimpulses der Volumenstrom vergrößert werden. Bei einem elektrothermischen Aktuator wird durch Anlegen eines elektrischen Impulses in der Tinte eine Dampfblase gebildet, die den Tintentropfen ausstößt. Bei einem piezoelektrischen Wandler kommt es bei elektrischer Ansteuerung zu einer Volumenkontraktion bzw. zu einer Überlagerung von generierten Druckwellen und somit wiederum zum Ausstoß eines Tintentropfens. Durch Änderung der Dauer dieses Ansteuerungsimpulses, insbesondere durch Erhöhung der Einschaltdauer, kann auf einfachem Weg die Menge der ausgestoßenen Tinte reduziert werden. Dabei sind jedoch gewisse Mindesteinschaltzeiten einzuhalten, da beispielsweise bei einem elektrothermischen Wandler eine gewisse Zeit erforderlich ist, bis sich die Dampfblase in der Tinte bildet.

Eine weitere Möglichkeit zur Anpassung des Volumenstroms der ausgestoßenen Tinte besteht darin, die zeitliche Abfolge der abgegebenen Tintentropfen zu variieren. Das Druckteil bewegt sich zumeist kontinuierlich unter dem Tintendruckkopf vorbei, ferner ist der Abstand zwischen der Tintenausstoßdüse und der Oberfläche des Druckteils derart gewählt, dass alle ausgestoßenen Tintentropfen entsprechend geformt zur selben Zeit auf der Oberfläche des Druckteils auftreffen. Aufgrund einer vorhandenen Struktur des Druckteils ändert sich dieser Abstand, sodass bezogen auf die Druckpunkte auf der Grundebene des Druckteils, die erhabenen Strukturen des Druckteils früher von einem Tintentropfen getroffen werden. Zu diesem Zeitpunkt hat sich das Druckteil aber relativ zur Tintenausstoßdüse um einen geringeren Betrag bewegt, sodass es in diesem Abschnitt zu einer Konzentration von Druckpunkten kommen wird, wodurch das zu druckende Abbild verzerrt auf das Druckteil übertragen wird, insbesondere kommt es dadurch zu einer Zusammenziehung des Abbilds. Bei einer abfallenden Flanke sind die Verhältnisse genau umgekehrt. Zusätzlich würde ohne das erfindungsgemäße Verfahren auf eine geneigte Fläche eine geringere Menge an Tinte aufgetragen werden. Die anspruchsgemäße Weiterbildung nach der zur Vergrößerung des Volumenstroms der zeitliche Ablauf des Ansteuerimpulses variiert wird hat den Vorteil, dass somit in Relation zu den Ansteuerimpulsen für Druckpunkte auf der Grundebene des Druckteils, die Ansteuerimpulse für einen zu bedruckenden erhabenen Abschnitt des Druckteils zeitlich verzögert werden, sodass die abgegebenen Tintentropfen relativ gesehen wiederum alle zum selben Zeitpunkt auf dem Druckteil auftreffen. Als Grundebene wird die Oberfläche des Druckteils ohne Höhenprofil bezeichnet, auf der das Abbild aufgebracht wird.

Durch die Variation der Impulsform des Ansteuerimpulses sind mehrere vorteilhafte Weitebildungen möglich. Beispielsweise kann bei stärker geneigten Oberflächen ein Druckpunkt mit einem einzelnen Tintentropfen nicht mehr zuverlässig ausgebildet werden, sodass beispielsweise eine Druckdüse unmittelbar hintereinander zwei Tropfen mit geringerem Tintenvolumen abgibt, die auf der Oberfläche auftreffen und so den zu bedruckenden Druckpunkt ergeben. Ferner wird sich bei Draufsicht auf die zu bedruckende Oberfläche bei einer geneigten Oberfläche eine im Wesentlichen elliptische Druckpunktform ergeben. Durch Änderung der Impulsform, beispielsweise in einen Hauptpuls, der zwei hintereinander gelagerte Maxima aufweist, kann ein Tintentropfen abgegeben werden, der beim Auftreffen auf die geneigte Oberfläche einen entsprechenden Tropfen ausbildet, wobei jeder Abschnitt des Tropfens mit ausreichend Tinte versorgt ist. Abhängig von der Art des Anstiegs bzw. des Abfalls kann somit der Ansteuerimpuls beispielsweise dahingehend verändert werden, dass die ausgestoßene Tintenmenge über der Dauer des Impulses zunimmt, die gesamte ausgestoßene Tintenmenge also insgesamt vergrößert wird. Insbesondere kann auch die Flankensteilheit des Ansteuerpulses geändert werden, um so gezielt einen an die Steigung der zu bedruckenden Oberfläche angepassten Tintentropfen bilden zu können.

Übersteigt die Steigung einen weiteren Schwellenwert ist gemäß einer Weiterbildung vorgesehen, dass die Anzahl der Ansteuerimpulse je zu übertragendem Druckpunkt und Druckdüse erhöht wird. Verringert sich der Abstand zwischen Druckdüse und zu bedruckender Oberfläche stark bzw. ist die zu bedruckende Oberfläche sehr stark geneigt, ist es von Vorteil, wenn statt eines einzelnen Impulses zwei oder mehrere unmittelbar aufeinander folgende Pulse abgegeben werden, wobei die abgegebene Tintenmenge jedes Einzelpulses verringert wird, aber insgesamt die ausgestoßene Tintenmenge vergrößert wird.

Bei den zu bedruckenden Druckteilen können gegebenenfalls Oberflächenungenauigkeiten vorhanden sein, die beispielsweise aufgrund unterschiedlicher Dicke bei der Herstellung des Druckteils gegeben sind bzw. auch aufgrund der Bewegung des Druckteils durch ein Fördermittel relativ zum Tintenstrahldruckkopf herrühren können. Diese zumeist geringfügigen Oberflächenungenauigkeiten sind für das Druckergebnis jedoch kaum von Bedeutung, daher wird gemäß einer vorteilhaften Weiterbildung der Schwellwert als ein Mittelwert der Oberflächenungenauigkeiten des Druckteils festgelegt. Somit wird bei geringfügigen Schwankungen der Oberflächenbeschaffenheit, das Tintenstrahldruckverfahren unverändert fortgeführt, jedoch wird bei einer Überschreitung der Oberflächenungenauigkeit über den ermittelten Schwellwert das Druckverfahren angepasst und insbesondere die ausgestoßene Tintenmenge angepasst.

Einen besonderen Vorteil erhält man, wenn das Profilmodel von einem Produktionsplanungssystem bereitgestellt wird, da somit auf Produktions- bzw. Konstruktionsdaten des Druckteils zugegriffen werden kann, was insbesondere eine äußerst schnelle und flexible Anpassung des erfindungsgemäßen Verfahrens auf unterschiedlichste zu bedruckende Druckteile ermöglicht. Insbesondere ist es mit dieser Weiterbildung möglich, dass ohne einen Einlernvorgang bzw. einen entsprechenden Konfigurationsschritt, das Druckverfahren unmittelbar auf einen sich ändernden Druckteil angepasst werden kann.

Von Vorteil ist ferner eine Weiterbildung, nach der das Profilmodell von einer Erfassungsvorrichtung ermittelt wird, da das Verfahren somit unmittelbar auf die Oberflächenstruktur des Druckteils angepasst werden kann, wobei diese Oberflächenstruktur im Zuge des Druckvorgangs ermittelt wird. Die Erfassungsvorrichtung kann dabei dem Tintenstrahldrucker vorgelagert sein, es ist jedoch auch möglich, dass die Erfassungsvorrichtung am Tintenstrahldruckkopf angeordnet ist und somit eine äußerst zeitnahe Evaluierung des zu bedruckenden Oberflächenprofils möglich ist.

Eine Weiterbildung besteht auch darin, dass im Druckdatenaufbereitungsmodul eine Dichteverteilung der Druckpunkte in Abhängigkeit von der Steigung berücksichtigt wird. Neben einer Anpassung der Tintenmenge je Tropfen, kann auch die Verteilung der aufgebrachten Druckpunkte angepasst werden, um so bspw. durch Erhöhen der Druckpunkte je Flächeneinheit, wiederum die aufgebrachte Tintenmenge zu erhöhen. Dies hat den Vorteil, dass ein ggf. einfach ausgebildeter Druckkopf verwendet werden kann, der insbesondere nur Tintentropfen mit einem einzigen festgelegten Volumen ausstoßen kann. Durch Anpassung, insbesondere Erhöhung, der Anzahl der ausgestoßenen Tropfen je Flächeneinheit, kann somit auch die ausgestoßene Tintenmenge je Flächeneinheit angepasst, insbesondere erhöht werden.

Die Aufgabe der Erfindung wird auch durch ein Verfahren zur adaptiven Anpassung der Ansteuerinformation für einen Tintenstrahldrucker gelöst. Dabei wird ein Druckdüsentestbild gedruckt, welches anschließend von einer Bilderfassungsvorrichtung erfasst wird. Ein Analysemodul führt für das erfasste Abbild eine Druckdichteanalyse durch und ermittelt daraus eine Druckdichteverteilung. Ferner wird mittels einer Positionsanalyse eine Abweichungsinformation ermittelt. Vom Druckdatenaufbereitungsmodul wird für die folgenden Druckvorgänge das zu druckende Abbild mit der Druckdichteverteilung verknüpft und die Ansteuerinformation für die Druckdüsen mit der Abweichungsinformation verknüpft. Durch dieses erfindungsgemäße Verfahren ist sichergestellt, dass kontinuierlich eine Prüfung und Anpassung des Druckverfahrens möglich ist, um Abweichungen ausgleichen zu können, die sich beispielsweise aufgrund des Betriebs des Tintenstrahldruckers ergeben. Während des Druckbetriebs kann es beispielsweise zu Abnutzungserscheinungen bzw. geringfügigen Anlagerungserscheinungen im Bereich der Druckdüsen kommen, sodass das tatsächliche Druckbild vom gewünschten und ursprünglich kalibrierten Druckbild abweichen wird. Durch Drucken eines Druckdüsentestbilds kann nun jederzeit ein Abbild der aktuellen Druckdüsensituation erstellt werden, um mittels einer entsprechenden Aufbereitung des erfassten Abbilds aufgetretene Abweichungen korrigieren zu können.

Für die Qualität des Druckbilds von entscheidender Bedeutung ist einmal eine korrekte Positionierung der einzelnen Druckbildpunkte des Druckbilds am Druckteil und andererseits eine entsprechend genaue Einhaltung der auf das Druckteil übertragenen Tintenmenge je Druckpunkt. Da die einzelnen Tintenausstoßdüsen eines Tintendruckkopfs beispielsweise mittels Mikrostrukturierungsverfahren hergestellt werden, kann es zu Abweichungen kommen, die sich direkt auf die Druckbildqualität auswirken werden. Da eine derartige Druckreihe Tintenausstoßdüsen eine Mehrzahl derartiger Tintenausstoßdüsen aufweist, beispielsweise 128 oder 256, kommt es sehr wahrscheinlich zu Abweichungen der einzelnen Druckdüsengeometrien, was unter Umständen mit einer Beeinträchtigung der Qualität des Druckbilds einhergeht. Ferner kann es vorkommen, dass von einer Druckdüse der ausgestoßene Tintentropfen nicht in der bevorzugten Richtung ausgestoßen wird, sondern dass der Tropfen von der idealen Flugbahn abweicht und somit nicht am gewünschten Punkt am Druckteil auftrifft. Ein derartiger Versatz wird jedoch vom menschlichen Auge als sehr störende Abweichung wahrgenommen, sodass eine solche Abweichung jedenfalls korrigiert werden sollte. Eine weitere mögliche Störung rührt beispielsweise daher, dass auch bei gleichartiger Ansteuerung der Druckdüse, die von den Druckdüsen ausgestoßene Tintenmenge zwischen den einzelnen Düsen variieren kann. Mit dem erfindungsgemäßen Verfahren ist es nun möglich, derartige Abweichungen von der gewünschten Gleichmäßigkeit des Druckbildes zu korrigieren und somit über die gesamte Druckdauer bzw. den gesamten Einsatzzeitraum des Tintenstrahldruckers eine konstant hohe Qualität des Druckbildes gewährleisten zu können.

Für die Bildung des Druckdüsentestmusters ist es von Vorteil wenn das Druckdüsentestbild strukturiert ist, wobei jede einzelne Druckdüse zumindest einmal angesteuert wird, da somit neben der Ermittlung eines Gesamteindrucks, auch eine Einzeldüsenkontrolle und Überwachung möglich ist.

Von Vorteil ist eine Weiterbildung, nach der als Druckdüsentestbild eine periodische Struktur aufgebracht wird, da vom menschlichen Auge eine Abweichung innerhalb einer periodischen Struktur sehr schnell erkennbar ist und somit das Druckdüsentestbild eine erste optische Analyse durch den Benutzer ermöglicht.

Eine Weiterbildung nach der die Positionsanalyse mittels einer Differenzbildanalyse erfolgt hat den Vorteil, dass dadurch Abweichungen von einem Soll-Bild sehr augenfällig in Erscheinung treten werden und sich somit vom Analysemodul sehr deutlich die Position und gegebenenfalls auch der Grad der Abweichung ermitteln lassen.

Ferner ist es von Vorteil, wenn bei der Positionsanalyse eine Schwellwertanalyse durchgeführt wird, da somit eine Abweichung klassifizierbar wird. Insbesondere lässt sich festlegen, ob es sich um einen vernachlässigbaren, einen behebbaren oder einen nicht behebbaren Fehler handelt. Entsprechend dieser Klassifikation kann vom erfindungsgemäßen Verfahren eine entsprechende Korrektur durchgeführt werden bzw. ist festzulegen, dass der Tintenstrahldruckkopf für die Erzielung eines qualitativen Druckbildes nicht mehr geeignet ist und gegebenenfalls ausgetauscht werden muss.

Vorteilhaft ist ferner eine Weiterbildung nach der bei Überschreiten eines ersten Grenzwerts eine Düsenaustauschfunktion aktiviert wird, da somit eine ausgefallene bzw. beeinträchtigte Düse das Druckbild nicht wesentlich beeinträchtigen wird. Da ein Tintendruckkopf eines Tintenstrahldruckers zumeist mehrere hintereinander angeordnete Druckdüsenreihen aufweisen wird, kann beispielsweise die Funktion einer ausgefallenen bzw. beeinträchtigten Düse von einer anderen Düse übernommen werden, die ebenfalls dazu in der Lage ist, einen Druckpunkt an der Druckposition der zu ersetzenden Düse aufzubringen.

Eine mögliche Weiterbildung zur Korrektur eines vom gewünschten Soll abweichenden Druckbilds besteht darin, dass vom Druckdatenaufbereitungsmodul das zu druckende Abbild relativ zu den Druckdüsen verschoben wird. Weicht beispielsweise eine Druckdüse im Hinblick auf die Ausstoßrichtung des Tintentropfens bzw. die Menge der ausgestoßenen Tinte über einen Grenzwert vom Sollwert ab, kann durch Verschiebung des Druckbilds, also durch Änderung der Rasterung und der damit verbundenen Zuordnung der Druckbildpunkte zu den einzelnen Druckdüsen, das Druckbild derart angepasst werden, dass die aufgetretene Abweichung und damit verbundene Störung des Druckbilds ausgeglichen werden kann. Beispielsweise kann ein Druckbildfehler aufgrund einer ausgefallenen Düse dadurch kompensiert werden, dass das Druckbild um einen Abstand relativ zu den Druckdüsen verschoben wird, sodass die fehlerhafte Düse im Druckbild nicht mehr zum Einsatz kommt, oder deutlich seltener zum Einsatz kommt, so dass der Fehler nicht mehr auffällig in Erscheinung tritt.

Ferner ist eine Weiterbildung möglich, nach der vom Druckdatenaufbereitungsmodul eine Druckbildkorrektur durchgeführt wird. Da ein Druckbild mikroskopisch gesehen aus einer Vielzahl einzelner Bildpunkte gebildet wird, welche erst bei makroskopischer Betrachtung durch das menschliche Auge zu einem kontinuierlichen Druckbild zusammengefügt werden, kann das Druckbild derart angepasst werden, dass beispielsweise die Helligkeits- bzw. Farbinformation dahingehend geringfügig geändert wird, dass die betroffene Düse nicht oder seltener zum Einsatz kommt, um somit den Düsenfehler korrigieren zu können. Beispielsweise kann die Farbinformation benachbarter Punkte geändert werden, um die ausgefallene bzw. beeinträchtigte Düse zu ersetzen, wobei die mikroskopische Änderung des Druckbildes, insbesondere der einzelnen Druckbildpunkte, makroskopisch nicht in Erscheinung treten wird.

Eine Weiterbildung nach der die Druckdichteverteilung durch Erfassung der Druckpunktgrößer ermittelt wird, hat den Vorteil, dass über die Druckpunktgröße direkt auch auf die Saugfähigkeit des zu bedruckenden Druckteils rückgeschlossen werden kann. Da die Saugfähigkeit des Druckteils ganz wesentlichen Einfluss auf die Qualität des Druckbildes haben wird, kann mit dieser Weiterbildung insbesondere spezifisch für jede einzelne Tinte ermittelt werden, wie die einzelnen Tinten am Druckteil aufgenommen werden. Die Ermittlung der Druckpunktgröße kann ferner die Ermittlung der Druckpunktgeometrie umfassen, wodurch eine Prüfung möglich ist, ob es bei einzelnen Druckdüsen zu einer Beeinträchtigung der Düsengeometrie gekommen ist, sodass die Düsen den Tintentropfen nicht mehr in der bevorzugten Richtung ausstoßen.

Von Vorteil ist ferner, wenn gemäß einer Weiterbildung bei der Verknüpfung der Druckdichteverteilung mit dem zu druckenden Abbild eine Variation der individuellen Düsenansteuerung durchgeführt wird. Beispielsweise durch Veränderung der Pulsdauer bzw. Pulsform und Änderung des zeitlichen Verhaltens des Ansteuerpulses kann die von der Düse ausgestoßene Tintenmenge dahingehend positiv beeinflusst werden, dass eine vorhandene Abweichung von einem gewünschten, auszustoßendem Tintentropfen korrigiert werden kann.

Eine Weiterbildung nach der bei der Erstellung des Druckdüsentestbilds eine Variation der Druckpunktgröße erfolgt, hat den Vorteil, dass im Zuge des Testbilds die Druckdüsen dahingehend geprüft werden können, wie weit sie in der Lage sind, unterschiedliche Tintenmengen auszustoßen, um somit unterschiedliche Druckbildpunkte ausbilden zu können. Da Druckdüsen zumeist nicht nur eine festgelegte Menge an Tinte ausstoßen können, hat diese Weiterbildung den Vorteil, dass geprüft werden kann, wie genau die spezifische, ausgestoßene Tintenmenge im Laufe der Betriebsdauer des Tintenstrahldruckers eingehalten werden kann.

Die Erfindung betrifft auch einen Tintenstrahldrucker, welcher ein Positionserfassungsmittel aufweist ist und wobei in einem Speichermittel Profildaten von zu bedruckenden Druckteilen hinterlegt sind und ein Auswerte- und Vergleichsmodul eine Korrektur der Ansteuerung der Druckdüsen vornimmt, um ein hochqualitatives Druckbild erzeugen zu können, unabhängig vom zu bedruckendem Druckteil.

In einer Weiterbildung kann ferner vorgesehen sein, dass aus den hinterlegten Profildaten eine maximale Erhebung des Profils ermittelt wird und darauf basierend, der Druckkopf in jenen Abstand zum Druckteil bewegt wird, der zur Bildung eines korrekt geformten Tropfens erforderlich ist. Durch die vorteilhafte Weiterbildung, nach der der Tintendruckkopf des Tintenstrahldruckers in Richtung parallel zur Ausstoßrichtung beweglich angeordnet ist, bspw. über einen Stellmotor, kann unter Einhaltung der erforderlichen Ausrichtegenauigkeit, der Druckkopf auf den erforderlichen Druckabstand bewegt werden. Insbesondere ist der initale Abstand auch von der Größe der abgegebenen Tintentropfen abhängig, so dass bei einem Druckkopf der unterschiedlich große Tintentropfen abgeben kann, der Abstand jeweils individuell angepasst werden kann.

Zum besseren Verständnis der Erfindung wird diese anhand der nachfolgenden Figuren näher erläutert.

Es zeigen jeweils in stark schematisch vereinfachter Darstellung:
Fig. 1 Das erfindungsgemäße Verfahren zur Korrektur von Druckbildstörungen bzw.
   Abweichungen;
Fig. 2 Das erfindungsgemäße Verfahren zur Korrektur der Ansteuerung der Druckdüsen beim Bedrucken eines strukturierten Druckteils;
Fig. 3 Das erfindungsgemäße Verfahren zur Korrektur der Ansteuerung der Druckdüsen aufgrund eines ermittelten und ausgewerteten Druckdüsentestbilds;
Fig. 4
   a) eine vergrößerte Darstellung möglicher Abweichungen vom gewünschten Druckmuster;
   b) eine Detaildarstellung beim Bedrucken eines profilierten Druckteils.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

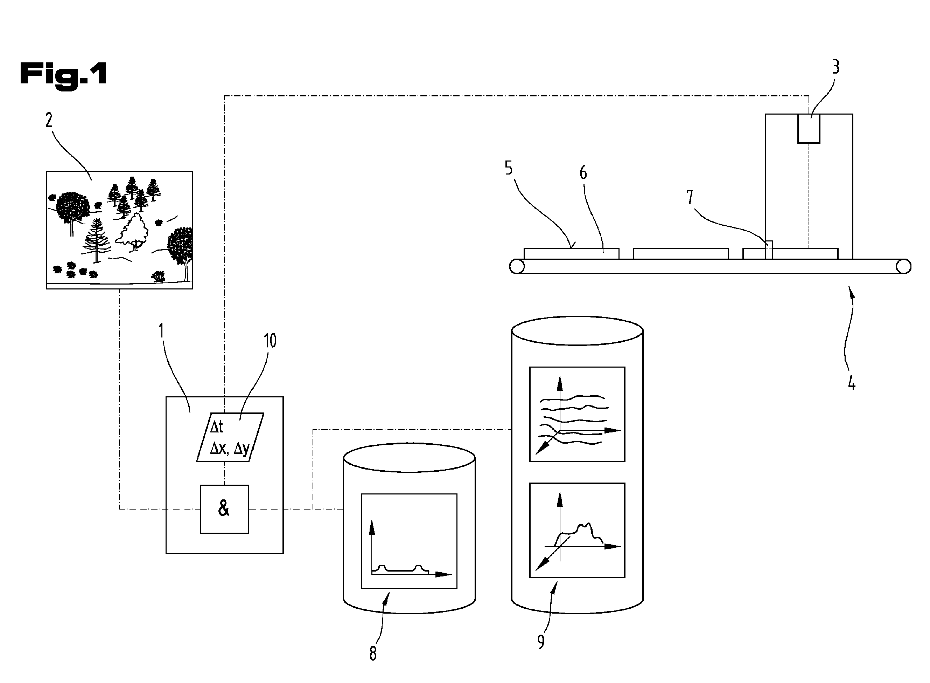

Fig. 1 zeigt eine stark vereinfachte schematische Darstellung des erfindungsgemäßen Verfahrens. Von einer Druckersteuerung, insbesondere einem Druckdatenaufbereitungsmodul 1 wird ein zu druckendes Abbild 2 in einzelne Druckpunkte aufgelöst um dann spezifisch die einzelnen Druckdüsen 3 einer Tintenstrahldruckvorrichtung 4 anzusteuern, um somit durch gezielte Steuerung der Abgabe von Tintentropfen, das zu druckende Abbild 2 auf die Oberfläche 5 eines Druckteils 6 zu übertragen. Zur Bestimmung der relativen Position des Druckteils 6 in Bezug zur Tintenstrahldruckvorrichtung 4, insbesondere zu den Druckdüsen 3, weist die Tintenstrahldruckvorrichtung 4 bevorzugt ein Positionserfassungsmittel 7 auf. Zur Erzielung eines hochqualitativen Druckbilds wird vom Druckdatenaufbereitungsmodul 1 das zu druckende Abbild 2 mit einem hinterlegten Höhenprofil 8 und/oder mit Positions- und Intensitätskorrekturdaten 9 verknüpft. Basierend auf der Verknüpfung wird von einem Korrekturprozessor 10 eine Anpassung der Ansteuersignale für die Druckdüsen 3 der Tintenstrahldruckvorrichtung 4 durchgeführt, um somit die Verzerrung des Druckbilds aufgrund eines Höhenprofils des Druckteils bzw. eine Störung des Druckbilds aufgrund unterschiedlicher Oberflächeneigenschaften des Druckteils und/oder Ungleichmäßigkeiten der Druckdüsen ausgleichen zu können und somit auf jedem Druckteil ein qualitativ hochwertiges Druckbild aufbringen zu können.

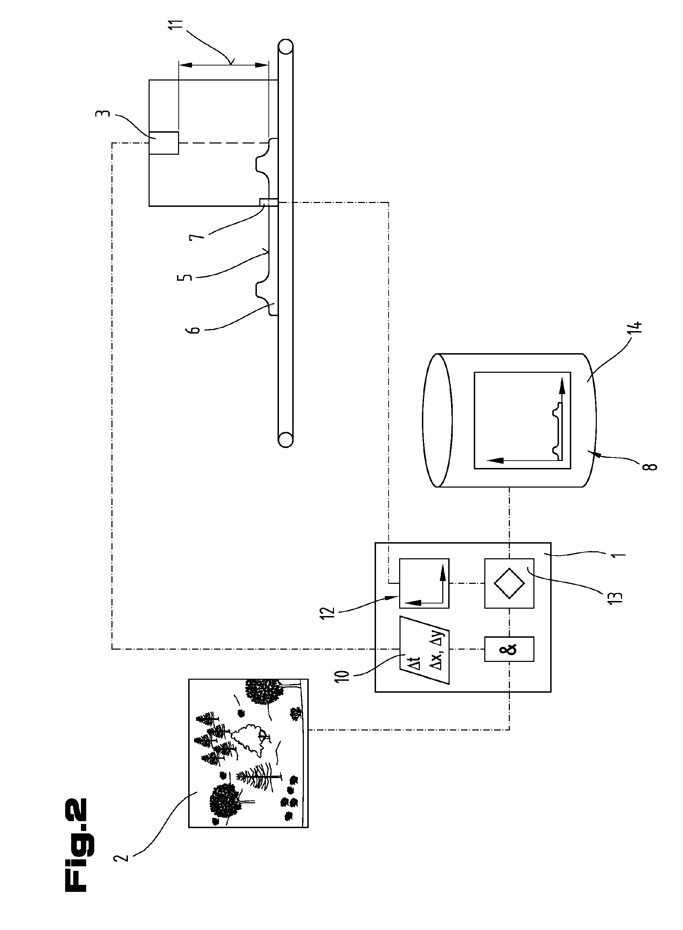

Fig. 2 zeigt eine schematische Darstellung einer ersten Ausbildung des erfindungsgemäßen Verfahrens, um ein zu druckendes Abbild 2 auf ein Druckteil 6 zu übertragen, wobei dieses Druckteil ein Höhenprofil aufweist, wodurch sich der Abstand 11 zwischen der Oberfläche 5 des Druckteils 6 und den Druckdüsen 3 während der Übertragung des Abbilds auf das Druckteil ändert. Für die Herstellung eines qualitativ hochwertigen Druckbilds ist dieser Abstand 11 jedoch dahingehend von Bedeutung, da nach Ausstoß der Tinte aus den Druckdüsen 3 eine bestimmte Flugzeit erforderlich ist, um die Tinte zu einem Tropfen zu formen, welcher beim Auftreffen auf die Oberfläche 5 des Druckteils 6 den gewünschten Druckpunkt bildet. Bei Verringerung des Abstandes kann die freie Flugzeit zu gering werden um die gewünschte Tropfenform ausbilden zu können.

Bei einem Druckteil mit einem Höhenprofil ergibt sich jedoch das weitere Problem, dass im Bereich von Flanken des Höhenprofils der Tropfen auf eine, von der Normalen auf die Flugbahn des Tropfens abweichende, geneigte Ebene auftrifft und somit grundsätzlich eine Abweichung des gebildeten Druckpunkts von der gewünschten idealen Form, im wesentlichen einer Kreisform, gegeben ist. Auch kann es zu Verlaufserscheinungen kommen, in dem Druckpunkte ineinander fließen und somit ein stark verzerrtes Druckbild entsteht.

Zur Korrektur dieser Effekte kann nun beispielsweise die Ansteuerung der Druckdüsen derart angepasst werden, dass die je Tropfen ausgestoßene Tintenmenge reduziert wird, jedoch gleichzeitig die Anzahl der übertragenen Punkte je Abschnitt erhöht wird, um somit die gesamte ausgestoßene Tintenmenge je zu bedruckendem Abschnitt zu erhöhen und das Druckbild korrekt übertragen zu können. Auch kann beispielsweise die Tropfenmasse durch adaptive Anpassung der ausgestoßenen Tintenmenge dahingehend beeinflusst werden, dass ein Tropfen gebildet wird, dessen Tintenmenge sich entlang der Auftreffbewegung ändert, bspw. bei bedrucken einer Flanke zunimmt. Da das Druckteil 6 von einer Vorschubvorrichtung relativ zu den Druckdüsen 3 bewegt wird, wird jeder einzelne Tintentropfen auf eine sich bewegende Oberfläche auftreffen und es somit zu einer geringfügigen Aufweitung des Druckpunktes hin zu einer Ellipsenform kommen. Trifft nun der Tropfen auf eine sich bewegende geneigte Ebene, wird es insbesondere zu einer besonders starken Verzerrung der Form des Druckpunkts kommen, wobei aufgrund des sich ändernden Abstandes zwischen der Oberfläche des Druckteils und den Druckdüsen die Gefahr besteht, dass es beim Auftreffen des Tropfens auf die Oberfläche zu unerwünschten Bildungen von Teiltropfen kommen kann, die sich wesentlich nachteilig auf das Druckbild auswirken.

Daher wird von einem Positionserfassungsmittel 7 die Relativposition des Druckteils 6 in Bezug auf die Druckdüsen 3 erfasst und von einem Koordinatenanalysemodul 12 des Druckdatenaufbereitungsmoduls 1 aus der erfassten Bewegungsinformation eine Koordinateninformation ermittelt. Von einem Vergleichsmodul 13 wird die ermittelte Koordinateninformation mit einem in einem Speichermittel 14 hinterlegten Höhenprofil 8 verglichen. In diesem Höhenprofil 8 ist insbesondere hinterlegt, in welchen Abschnitten des Druckteils eine Flanke vorhanden ist, wobei die Abschnitte beispielsweise im Bezug auf eine Begrenzungskante festgelegt sein können. Insbesondere wird vom Vergleichsmodul 13 also eine Korrekturinformation generiert, welche mit dem zu druckenden Abbild 2 verknüpft wird und dem Korrekturprozessor 10 zugeführt wird. Dieser Korrekturprozessor verändert nun beispielsweise die Ansteuerimpulse für die einzelnen Druckdüsen derart, dass die ausgestoßene Tintenmenge angepasst wird um so bei Druck auf eine Flanke dennoch einen möglichst optimalen Druckpunkt bilden zu können. Ferner ist es möglich, das Ansteuerzeitverhalten dahingehend zu ändern, dass statt eines einzelnen Pulses mehrere Pulse generiert werden, wodurch beispielsweise mehrere kleine Druckpunkte auf das Druckteil übertragen werden, die jedoch bei Überlagerung wieder den gewünschten optischen Eindruck ergeben.

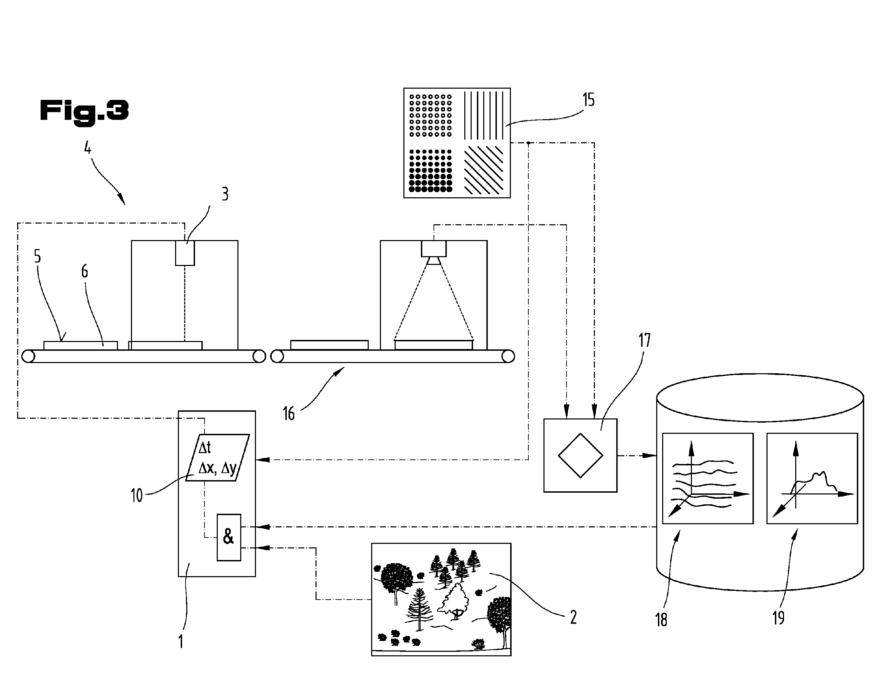

In dieser Abbildung und in der nachfolgenden Fig. 3 sind jene Funktionseinheiten des Datenaufbereitungsmoduls 1 nicht dargestellt, mit denen das zu druckende Abbild aufbereitet wird, um die Druckdüsen 3 entsprechend ansteuern zu können. Beispielsweise wird dazu das zu druckende Abbild gerastert und in die entsprechenden Farbauszüge aufgeteilt. Dies ist jedoch allgemeines Fachwissen aus dem Bereich der Tintenstrahldrucktechnik, sodass hierin darauf nicht näher eingegangen wird.

Fig. 3 zeigt eine weitere schematisierte Detaildarstellung des erfindungsgemäßen Verfahrens um Druckbildfehler zu korrigieren, die aufgrund ungleichmäßig arbeitender Druckdüsen bzw. aufgrund unterschiedlicher Oberflächeneigenschaften der Druckteile entstehen.

Beispielsweise hängt die Größe des Druckpunktes auf der Oberfläche des Druckteils von der Viskosität der Tinte und der Saugfähigkeit der Oberfläche des Druckteils ab.

Dazu wird in einem ersten Schritt ein Druckdüsentestbild 15 vom Druckdatenaufbereitungsmodul 1 an die Druckdüsen 3 der Tintenstrahldruckvorrichtung 4 übermittelt und somit das Druckdüsentestbild 15 auf die Oberfläche 5 des Druckteils 6 übertragen. Das hergestellte Druckbild wird von einer nachgelagerten Bilderfassungsvorrichtung 16 erfasst, von einem Auswerte- und Vergleichsmodul 17 aufbereitet und mit dem ursprünglichen Referenzdruckdüsentestbild 15 verglichen. Durch Auswertung und Vergleich des tatsächlichen Druckbilds mit dem Soll-Druckdüsentestbild lassen sich nun zwei grundlegende Abweichungsarten extrahieren und darauf entsprechende Korrekturdaten ermitteln. Die Druckdüsen 3 eines Tintenstrahldruckkopfs sind zumeist gleichartig ausgebildet und geben daher bei Ansteuerung mit einem elektrischen Impuls eine definierte Menge an Tinte ab. Beispielsweise kann es nun aufgrund von Alterungserscheinungen vorkommen, dass sich die ausgestoßene Tintenmenge einer Druckdüse verändert, wodurch im Vergleich zu den anderen Druckdüsen des Tintenstrahldruckkopfs ein unterschiedlich großer Druckpunkt auf der Oberfläche 5 des Druckteils 6 gebildet wird. Vom Auswerte- und Vergleichsmodul 17 kann nun beispielsweise eine Bildsubtraktionsanalyse durchgeführt werden, bei der das von der Bilderfassungsvorrichtung 16 erfasste Druckbild punktweise vom Referenzdruckdüsentestbild 15 subtrahiert wird. Wenn keine Abweichungen vorhanden sind, wird das Ergebnis dieser Analyse ein homogenes Bild sein, welches keine Helligkeitsschwankungen aufweisen wird. Dementsprechend werden also Abweichungen durch einen sehr großen Helligkeitskontrast in Erscheinung treten und somit eindeutig und klar identifizier- und klassifizierbar sein. Vom Auswerte- und Vergleichsmodul 17 werden nun im Fall abweichender Druckpunktgrößen Intensitätskorrekturdaten 18 und/oder Positionskorrekturdaten 19 ermittelt und in einem Speichermittel hinterlegt. Vom Druckdatenaufbereitungsmodul 1 werden nun die ermittelten Korrekturdaten 18, 19 mit dem zu druckenden Abbild 2 verknüpft und vom Korrekturprozessor 10 die Ansteuerdaten für die Druckdüsen 3 entsprechend angepasst um sowohl Positionsfehler als auch Intensitätsfehler während des Druckvorgangs korrigieren zu können.

Wesentlich an den erfindungsgemäßen Verfahren ist nun, dass während des Druckvorgangs zur Übertragung eines Abbild auf das Druckteil, Störungen der Druckdüsengeometrie bzw. Unregelmäßigkeiten der Oberflächenlage des Druckteils ausgeglichen werden können, um so ein störungsfreies Druckbild erzeugen zu können.

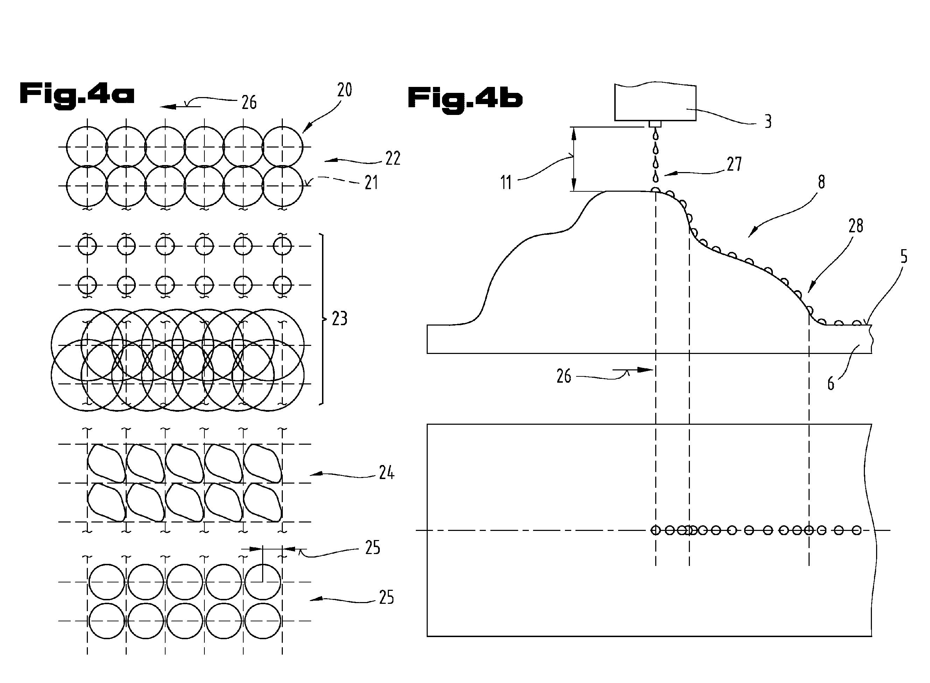

Die Figuren 4a und 4b zeigen nun die beiden wesentlichen Einflussfaktoren auf die Erzielung eines qualitativ hochwertigen Druckbildes.

In Fig. 4a sind mögliche Störungen des Druckbildes aufgrund von Abweichungen der Druckdüsenfunktionalität im Hinblick auf die ausgestoßene Tintenmenge bzw. auf die exakte Positionierung des Druckpunktes dargestellt. Die Figur zeigt eine stark vergrößerte Darstellung eines Ausschnittes des Druckbildes um die einzelnen Druckpunkte 20 erkennen zu können. Wie hinlänglich bekannt ist, wird bei einem Tintenstrahldrucker das zu druckende Abbild in eine Vielzahl einzelner Druckpunkte aufgelöst, die regelmäßig entlang eines Druckrasters 21 auf die Oberfläche des Druckteils übertragen werden. Das Raster 21 bzw. die Größe der Druckpunkte 20 ist dabei so gewählt, dass bei einer dichten Bedruckung, für den Betrachter des Druckbilds eine vollflächig eingefärbte Farbfläche entsteht. In der Figur nicht dargestellt kann beispielsweise eine zweite Druckdüsenreihe angeordnet sein, welche um eine halbe Druckpunktgröße versetzt ist, um somit die freien Zwischenräume zwischen den einzelnen Druckpunkten 20 zu bedrucken, sodass tatsächlich ein vollflächiger Farbauftrag möglich ist. Ferner können die Druckpunkte auch so groß sein, dass sie sich um einen bestimmten Betrag überlappen, um so eine möglichst große Abdeckung des zu bedruckenden Abschnitts zu ergeben. Auf die Technik und Möglichkeiten der Anordnung von Druckdüsen zur Erzielung einer gleichmäßigen Bedruckung eines Druckteils wird hierin nicht weiter eingegangen, da dies für die Ausbildung des erfindungsgemäßen Verfahrens nicht wesentlich ist.

Ein erster Abschnitt 22 zeigt ein ungestörtes und nicht korrekturbedürftiges Druckbild, bei dem alle Druckpunkte 20 an den vorgesehenen Rasterpunkten des Druckrasters 21 angeordnet sind und auch in korrekter Größe aufgebracht wurden. Gegebenenfalls kann eine zweite Druckdüsenreihe die verbleibenden unbedruckten Abschnitte bedrucken, um so einen vollflächig bedruckten Abschnitt bilden zu können.

In einem zweiten Abschnitt 23 ist eine Situation dargestellt, bei dem von einer Druckdüse zu wenig bzw. zu viel Tinte ausgestoßen wird, sodass zu kleine Druckpunkte bzw. zu große Druckpunkte auf der Oberfläche des Druckteils gebildet werden. Bei zu kleinen Druckpunkten besteht die Gefahr, dass die Farbe der Oberfläche des Druckteils derart stark durchscheint, dass sie vom Betrachter als störender Farbeindruck wahrgenommen wird. Besonders störend ist dies, wenn zwischen der Farbe des Druckpunktes und der Farbe der Oberfläche des Druckteils ein besonders hoher Farb- bzw. Helligkeitskontrast besteht. Bei zu großen Druckpunkten ergibt sich das Problem, dass aufgrund der größeren benetzten Fläche die Farbdichte stark reduziert ist, so dass ein deutlich erkennbarer Farbsättigungsunterschied entsteht. Auch kann es vorkommen, dass bei zuviel aufgetragener Tinte je Abschnitt diese nicht ausreichend trocknen kann und somit die Gefahr des Verwischens besteht bzw. kann es bei Aufbringen einer folgenden Lage Tinte zu einem Ineinanderfließen der Tinten kommen, was einen deutlichen Qualitätsmangel darstellt.

Eine weitere mögliche Störung ist in einem dritten Abschnitt 24 dargestellt, wobei hier eine fehlerhafte Positionierung des Druckpunktes und eine starke Abweichung des Druckpunktes von der ideal gewünschten Kreisform gegeben sind. Beispielsweise kann dies dadurch geschehen, dass sich in der Druckdüse bzw. in der Ausstoßöffnung der Druckdüse eine Ablagerung gebildet hat, wodurch die Tinte ungleichmäßig bzw. in eine von der gewünschten Richtung abweichende Richtung ausgestoßen wird. Die dargestellten Druckbilder des zweiten 23 und dritten 24 Abschnitts können nicht nur von einer Störung der Druckdüse herrühren, sondern es ergibt auch eine geänderte Saugfähigkeit der Oberfläche des Druckteils bzw. eine geänderte Viskosität der Tinte ein derartiges Druckbild. Das Druckbild im dritten Abschnitt 24 kann beispielsweise von einer Vorzugsrichtung der Saugfähigkeit der Oberfläche des Druckteils herrühren, beispielsweise wenn die Oberfläche eine faserartige Struktur aufweist, in deren Richtung die Tinte bevorzugt läuft. Auch kann bei einem nicht korrigierten Druck auf eine Flanke eines Strukturprofils, bei dem also die Normalebene geneigt ist, eine derartige Verzerrung der Tropfen am Druckteil entstehen.

Mit dem erfindungsgemäßen Verfahren lassen sich nun alle derartigen Störungen des Druckbildes ausgleichen, unabhängig davon, ob sie von einer Druckdüsenstörung oder geänderten Oberflächeneigenschaften des Druckteils herrühren. Beispielsweise kann die Störung die zum Druckbild des zweiten Abschnitts 23 führt, dadurch behoben werden, dass der Ansteuerimpuls für die betroffene Druckdüse entsprechend verlängert bzw. verkürzt wird, um somit mehr bzw. weniger Tinte auszustoßen. Eine Druckbildstörung wie sie im dritte Abschnitt 24 dargestellt ist, kann beispielsweise dadurch behoben werden, dass das Zeitverhalten des Ansteuerimpulses geändert wird und ggf. mehrere Einzelpulse generiert werden, um den Druckpunkt in Richtung des vorgesehenen Rasterpunkt des Druckrasters 21 zu verschieben. Ferner kann auch die Impulsform geändert werden, insbesondere die Flankensteilheit des Impulses, um so bspw. das ausgestoßene Tintenvolumen je Zeiteinheit beeinflussen zu können.

Im vierten Abschnitt 25 ist eine Situation dargestellt, bei der zwei Druckdüsen gegenüber dem Druckraster versetzt sind, sodass diese ihre Druckpunkte konstant um einen bestimmten Versatz 25 vom Druckraster 21 auf die Oberfläche des Druckteils übertragen. Eine Korrektur dieser Störung ist bspw. mittels einer zeitlichen Verzögerung des Ansteuersignals für die Druckdüse möglich, beispielsweise müssen die betroffenen Druckdüsen um eine bestimmte Zeit früher angesteuert werden, um entsprechend der Bewegungsrichtung 26 des Druckteils den Druckpunkt an der korrekten Rasterposition auszubilden.

In Fig. 4b ist die Situation beim Bedrucken eines Druckteils 6 mit einem Höhenprofil 8 dargestellt. Aufgrund der Bewegung 26 des Druckteils 6 relativ zu den Druckdüsen 3 kommt es zu einer Änderung des Abstandes 11 zwischen der Druckdüse 3 und der Oberfläche 5 des Druckteils 6. Demzufolge wird sich auch die freie Flugbahn der Tintentropfen 27 verkürzen, wodurch es ggf. vorkommen kann, dass der Tintentropfen noch nicht die für die Erzeugung eines optimalen Druckpunktes bevorzugte Form gebildet hat. Insbesondere ergibt sich jedoch im Bereich einer Flanke 28 das Problem, dass ein auftreffender Tintentropfen, der auf einer ebenen Fläche eine Kreisform ausbilden würde, näherungsweise in eine Ellipse aufgeweitet wird, was den Nachteil hat, dass sich somit die zu benetzende Fläche vergrößert, was ohne Korrektur der Tintenmenge bzw. des Ansteuerimpulses dazu führt, dass der Farb- bzw. Helligkeitswert des Druckpunktes vom gewünschten Wert abweicht. Ferner kommt es durch die abweichende Form des Druckpunktes zu einer nicht vollständigen Abdeckung der Oberfläche des Druckteils, sodass diese anschließend durchscheinen kann und den Gesamteindruck des Druckbilds stören kann. Auch kann das Auftreffen des Tintentropfens auf einer geneigten Fläche dazu führen, dass dieser Tropfen verstärkt in Abfallrichtung der Flanke verläuft, was somit wiederum einen Nachteil für ein qualitativ hochwertiges Druckbild darstellt. Mit dem erfindungsgemäßen Verfahren ist es nun möglich, durch Kenntnis der Position der Druckdüsen 3 in Relation zum Druckteil 6 insbesondere in Relation zum Höhenprofil 8 die Ansteuerung der einzelnen Druckdüsen 3 derart zu adaptieren, dass beispielsweise die Tintenmenge bei Bedrucken einer Flanke entsprechend angepasst wird. Ferner ist es möglich, dass anstelle eines einzelnen Druckpunktes mehrere Druckpunkte mit geringerer Tintenmenge aufgebracht werden, insgesamt aber die ausgestoßene Tintenmenge erhöht wird, um so die störenden Einflüsse zu verringern, in Gesamtheit jedoch wieder das gewünschte Druckbild zu erreichen.

Das erfindungsgemäße Verfahren ist insbesondere für jeden Tintenstrahldrucker anwendbar und ermöglicht somit einen hochqualitativen Druck auf eine Vielzahl unterschiedlicher Medien wie bspw. transparente Medien, Keramiken, Papier und Kunststoffe, sowie Materialien aus einem organischen Material wie bspw. Holz. Auch ist das Verfahren sowohl für einen vollflächigen Druck, bspw. zum Bilddruck, und auch für einen strukturierten Druck wie bspw. Rasterdruck, Text- und Grafikdruck geeignet.

Die Ausführungsbeispiele zeigen mögliche Ausführungsvarianten des adaptiven Anpassungsverfahren für einen Tintenstrahldrucker , wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

In den Fig. 2 und 3 sind weitere und gegebenenfalls für sich eigenständige Ausführungsformen des adaptiven Anpassungsverfahren für einen Tintenstrahldrucker gezeigt, wobei wiederum für gleiche Teile gleiche Bezugszeichen bzw. Bauteilbezeichnungen wie in den vorangegangenen Figuren verwendet werden. Um unnötige Wiederholungen zu vermeiden, wird auf die detaillierte Beschreibung in den vorangegangenen Figuren hingewiesen bzw. Bezug genommen.

Der Ordnung halber sei abschließend darauf hingewiesen, dass zum besseren Verständnis des Aufbaus des adaptiven Anpassungsverfahren für einen Tintenstrahldrucker dieses bzw. dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1 bis 4 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

1 Druckdatenaufbereitungsmodul
2 Zu druckendes Abbild
3 Druckdüsen
4 Tintenstrahldruckvorrichtung
5 Oberfläche
6 Druckteil
7 Positionserfassungsmittel
8 Höhenprofil
9 Positions- und Intensitätskorrekturdaten
10 Korrekturprozessor
11 Abstand
12 Koordinatenanalysemodul
13 Vergleichsmodul
14 Speichermittel
15 Druckdüsentestbild
16 Bilderfassungsvorrichtung
17 Auswerte- und Vergleichsmodul
18 Intensitätskorrekturdaten
19 Positionsdaten
20 Druckpunkte
21 Druckraster
22 Erster Abschnitt
23 Zweier Abschnitt
24 Dritter Abschnitt
25 Versatz
26 Bewegungsrichtung
27 Tintentropfen
28 Flanke

## Patentansprüche

1. Verfahren zur adaptiven Anpassung des Volumenstroms der ausgestoßenen Tinte für einem Tintenstrahldrucker (4), umfassend einen Tintendruckkopf mit zumindest einer Druckreihe Tintenausstoßdüsen, wobei von einem Druckdatenaufbereitungsmodul ein zu druckendes Abbild (2) in Ansteuerinformation für die Tintenausstoßdüsen umgewandelt wird, insbesondere in eine Folge von Ansteuerimpulsen, um durch individuelle Ansteuerung der Düsen zur Abgabe eines Tintentropfens in eine Ausstoßrichtung, das Abbild punktweise auf eine Oberfläche (5) des Druckteils (6) zu übertragen, **dadurch gekennzeichnet, dass** durch Ermittlung einer Bewegungsinformation des sich in einer Bewegungsebene relativ zum Tintendruckkopf bewegenden Druckteils eine Koordinateninformation relativ zum Druckteil ermittelt wird und durch Vergleich der Koordinateninformation mit einem hinterlegten Profilmodell des Druckteils eine Steigung der zu bedruckenden Oberfläche (5) in Bezug zur Ausstoßrichtung der Tinte ermittelt wird, wobei bei Überschreiten eines Schwellwerts der Steigung, der Volumenstrom der ausgestoßenen Tinte proportional zur Steigung erhöht wird.

2. Verfahren nach Anspruch 1, **dadurch gekennzeichnet, dass** der Schwellwert als Stufenwertprofil festgelegt wird.

3. Verfahren nach einem der Ansprüche 1 oder 2, **dadurch gekennzeichnet, dass** aus der Steigung eine Projektionsfläche parallel zur Bewegungsebene ermittelt wird und mit einer Projektionsfläche auf der Oberfläche (5) des Druckteils (6) in Verhältnis gesetzt wird.

4. Verfahren nach einem der Ansprüche 1 bis 3, **dadurch gekennzeichnet, dass** zur Vergrößerung des Volumenstroms die Impulsdauer und/oder die Amplitude erhöht wird.

5. Verfahren nach einem der Ansprüche 1 bis 4, **dadurch gekennzeichnet, dass** die zeitliche Abfolge der Ansteuerimpulse variiert wird.

6. Verfahren nach einem der Ansprüche 1 bis 5, **dadurch gekennzeichnet, dass** zur Vergrößerung des Volumenstroms die Impulsform des Ansteuerimpulses variiert wird.

7. Verfahren nach einem der Ansprüche 1 bis 6, **dadurch gekennzeichnet, dass** bei Überschreiten eines weiteren Schwellwerts der Steigung, die Anzahl der Ansteuerimpulse je zu übertragenden Druckpunkt und Druckdüse erhöht wird.

8. Verfahren nach einem der Ansprüche 1 bis 7, **dadurch gekennzeichnet, dass** der Schwellwert als ein Mittelwert der Oberflächenungenauigkeit des Druckteils (6) festgelegt wird.

9. Verfahren nach einem der Ansprüche 1 bis 8, **dadurch gekennzeichnet, dass** das Profilmodell von einem Produktionsplanungssystem bereitgestellt wird.

10. Verfahren nach einem der Ansprüche 1 bis 9, **dadurch gekennzeichnet, dass** das Profilmodell von einer Erfassungsvorrichtung (7) ermittelt wird.

11. Verfahren nach einem der Ansprüche 1 bis 10, **dadurch gekennzeichnet, dass** im Druckdatenaufbereitungsmodul eine Dichteverteilung der Druckpunkte in Abhängigkeit der Steigung berücksichtigt wird.

12. Verfahren zur adaptiven Anpassung der Ansteuerinformation für einen Tintenstrahldrucker (4), umfassend einen Tintendruckkopf mit zumindest einer Druckreihe Tintenausstoßdüsen, wobei von einem Druckdatenaufbereitungsmodul ein zu druckendes Abbild in Ansteuerinformation für die Tintenausstoßdüsen umgewandelt wird, um durch individuelle Ansteuerung der Düsen zur Abgabe eines Tintentropfens, das Abbild punktweise auf eine Oberfläche (5) des Druckteils (6) zu übertragen, **dadurch gekennzeichnet, dass** ein Druckdüsentestbild gedruckt wird, welches von einer Bilderfassungsvorrichtung (16) erfasst wird, dass ein Analysemodul (17) für das erfasste Abbild eine Druckdichteanalyse durchgeführt und daraus eine Druckdichteverteilung ermittelt wird und dass ferner eine Positionsanalyse durchgeführt und daraus eine Abweichungsinformation ermittelt wird, das im folgenden Druckvorgang vom Druckdatenaufbereitungsmodul das zu druckende Abbild mit der Druckdichteverteilung verknüpft und ferner die Ansteuerinformation mit der Abweichungsinformation verknüpft.

13. Verfahren nach Anspruch 12, **dadurch gekennzeichnet, dass** das Druckdüsentestbild strukturiert ist, wobei jede einzelne Druckdüse zumindest einmal angesteuert wird.

14. Verfahren nach Anspruch 12 oder 13, **dadurch gekennzeichnet, dass** als Druckdüsentestbild periodische Struktur aufgebracht wird.

15. Verfahren nach einem der Ansprüche 12 bis 14, **dadurch gekennzeichnet, dass** die Positionsanalyse mittels einer Differenzbildanalyse erfolgt.

16. Verfahren nach einem der Ansprüche 12 bis 15, **dadurch gekennzeichnet, dass** bei der Positionsanalyse eine Schwellwertanalyse durchgeführt wird.

17. Verfahren nach Anspruch 16, **dadurch gekennzeichnet, dass** bei Überschreiten eines ersten Grenzwerts eine Düsenaustauschfunktion aktiviert wird.

18. Verfahren nach einem der Ansprüche 12 bis 17, **dadurch gekennzeichnet, dass** vom Druckdatenaufbereitungsmodul das zu druckende Abbild relativ zu den Druckdüsen verschoben wird.

19. Verfahren nach einem der Ansprüche 12 bis 18, **dadurch gekennzeichnet, dass** vom Druckdatenaufbereitungsmodul eine Druckbildkorrektur durchgeführt wird.

20. Verfahren nach einem der Ansprüche 12 bis 19, **dadurch gekennzeichnet, dass** die Druckdichteverteilung durch Erfassung der Druckpunktgröße ermittelt wird.

21. Verfahren nach einem der Ansprüche 12 bis 20, **dadurch gekennzeichnet, dass** bei der Verknüpfung der Druckdichteverteilung mit dem zu druckenden Abbild, eine Variation der individuellen Düsenansteuerung durchgeführt wird.

22. Verfahren nach einem der Ansprüche 12 bis 21, **dadurch gekennzeichnet, dass** bei der Erstellung des Druckdüsentestbilds eine Variation der Druckpunktgröße erfolgt.

23. Tintenstrahldrucker (4), umfassend einen Tintendruckkopf mit zumindest einer Druckreihe Tintenausstoßdüsen, wobei von einem Druckdatenaufbereitungsmodul ein zu druckendes Abbild in Ansteuerinformation für die Tintenausstoßdüsen umgewandelt wird, insbesondere in eine Folge von Ansteuerimpulsen, um durch individuelle Ansteuerung der Düsen zur Abgabe eines Tintentropfens in eine Ausstoßrichtung, das Abbild punktweise auf eine Oberfläche (5) des Druckteils (6) zu übertragen, **dadurch gekennzeichnet, dass** ein Positionserfassungsmittel (7) vorhanden ist und wobei in einem Speichermittel Profildaten von zu bedruckenden Druckteilen () hinterlegt sind und ein Auswerte- und Vergleichsmodul zur Durchführung eines Verfahrens nach einem der Ansprüche 1 bis 22 ausgebildet ist.

24. Tintenstrahldrucker nach Anspruch 23, **dadurch gekennzeichnet, dass** der Tintendruckkopf in Richtung parallel zur Ausstoßrichtung beweglich angeordnet ist.
